# EUROPEAN PATENT SPECIFICATION

(11) **EP 0 921 320 B1**
(45) Date of publication and mention of the grant of the patent: **11.02.2004**
(21) Application number: 98905657.7
(22) Date of filing: 26.02.1998
(51) Int. Cl.: F15B 11/00, E02F 9/22, F15B 11/05

(54) **HYDRAULIC DRIVE DEVICE AND DIRECTION SWITCHOVER VALVE FOR HYDRAULIC MACHINE**
HYDRAULISCHE ANTRIEBSVORRICHTUNG UND UMSCHALTVENTIL FÜR HYDRAULISCHE MASCHINEN
TRANSMISSION HYDRAULIQUE ET SOUPAPE D'INVERSION POUR MACHINE HYDRAULIQUE

(30) Priority: 27.02.1997 JP 4419897
(43) Date of publication of application: 09.06.1999
(73) Proprietor: Hitachi Construction Machinery Co., Ltd., Bunkyo-ku Tokyo 112-0004 (JP)
(72) Inventor: SUGIYAMA, Genroku, Ibaraki 300-0402 (JP); HIRATA, Toichi, Ibaraki 300-1233 (JP); TOYOOKA, Tsukasa, Ibaraki 311-3413 (JP)
(74) Representative: Smulders, Theodorus A.H.J., Ir.
(86) International application number: PCT/JP1998/000781
(87) International publication number: WO 1998/038429

(56) References cited:
- WO-A-86/04963
- US-A- 3 411 295
- US-A- 3 920 034
- US-A- 5 222 870
- PATENT ABSTRACTS OF JAPAN vol. 015, no. 491 (M-1190), 12 December 1991 (1991-12-12) -& JP 03 213703 A (TOSHIBA MACH CO LTD), 19 September 1991 (1991-09-19)
- PATENT ABSTRACTS OF JAPAN vol. 014, no. 046 (M-0926), 26 January 1990 (1990-01-26) -& JP 01 275902 A (TOSHIBA MACH CO LTD), 6 November 1989 (1989-11-06)

## Description

### TECHNICAL FIELD

The present invention relates to a hydraulic drive system equipped in construction machines such as hydraulic excavators and hydraulic cranes, and a directional control valve apparatus for use in the hydraulic drive system. More particularly, the present invention relates to a hydraulic drive system and a directional control valve apparatus each of which includes a closed center directional control valve and an unloading circuit for connecting a hydraulic fluid supply line of a hydraulic pump to a reservoir.

### BACKGROUND ART

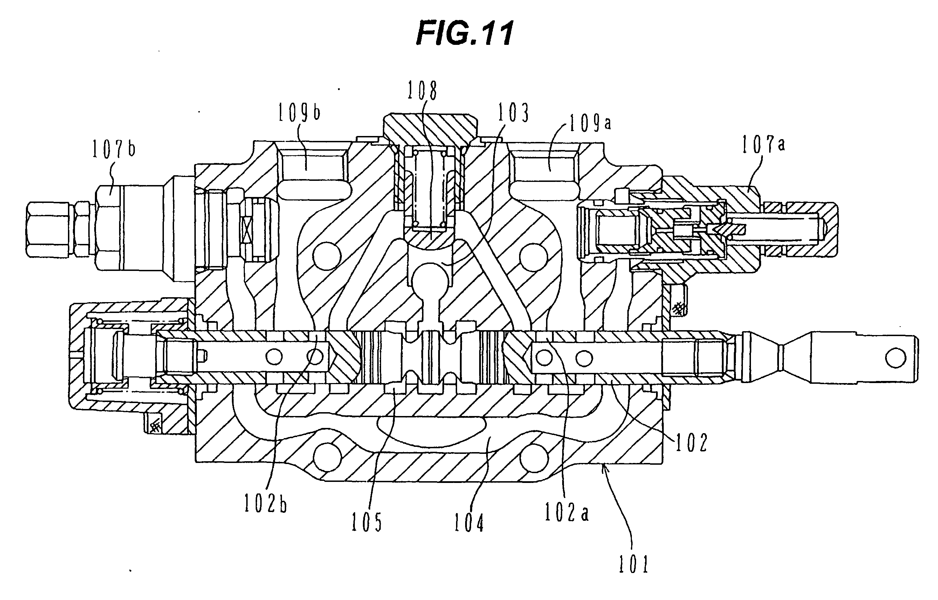

Directional control valves for use in a hydraulic drive system of hydraulic machines such as hydraulic excavators and hydraulic cranes are grouped into the open center type and the closed center type. One example of conventional directional control valve apparatus including an open center directional control valve is shown in Fig. 11.

In Fig. 11, a housing 101 includes a spool 102 inserted therein and displacing (through its stroke) depending on an input amount by which a control lever unit is operated. A feeder port 103 connected to a hydraulic pump and a bypass port 105 connected to a reservoir port 104 are formed in the housing 101 around a central portion of the spool 102. When the spool 102 is in a neutral position, the bypass port 105 is fully opened, causing all of a hydraulic fluid from the hydraulic pump to flow into a reservoir. As the spool 102 is moved to the left or right on the drawing, an opening area of the bypass port 105 is reduced, enabling part of the hydraulic fluid from the hydraulic pump to be supplied to an actuator through a meter-in throttle 102a or 102b and a load port 109a or 109b. When the spool 102 is in a full stroke position, the bypass port 105 is blocked off, enabling all of the hydraulic fluid from the hydraulic pump to be supplied to the actuator.

Additionally, denoted by 107a, 107b are overload relief valves and 108 is a load check valve, these valves being parts which are usually necessary for constructing the directional control valve apparatus. A not-shown main relief valve is also attached to the valve apparatus.

In the valve apparatus using such an open center directional control valve, since the bypass port 105 is throttled to have an opening corresponding to the input amount of the control lever unit, the so-called bleed control under which an actuator is driven while bleeding part of the delivery rate of a hydraulic pump can be effected at start-up of the actuator. The bleed control does not abruptly change the delivery pressure of the hydraulic pump and therefore provides a good operation feeling free from shocks imposed on the actuator.

On the other hand, a closed center directional control valve is a valve in which a feeder port is fully closed when a spool is in a neutral position. When combined with a pressure compensating valve, the closed center directional control valve can supply a hydraulic fluid to an actuator at a certain flow rate corresponding to the valve opening area regardless of variation in load pressure. However, since the closed center directional control valve is designed to always supply the actuator with the hydraulic fluid at a flow rate corresponding to the valve opening area, the delivery pressure of the hydraulic pump tends to change abruptly and the actuator tends to move so quickly. In view of such a problem, JP, A, 7-63203 proposes a hydraulic drive system which enables the bleed control to be effected in a hydraulic circuit including the closed center directional control valve as with the case of using the open center directional control valve.

The hydraulic drive system disclosed in JP, A, 7-63203 comprises a variable displacement hydraulic pump, a plurality of actuators driven by a hydraulic fluid delivered from the hydraulic pump, a plurality of closed center directional control valves for controlling flows of the hydraulic fluid supplied to the plurality of actuators, a plurality of control lever units for driving the plurality of directional control valves to operate, a bypass line connected to a hydraulic fluid supply line of the hydraulic pump, a bleed valve for returning the hydraulic fluid delivered from the hydraulic pump to a reservoir when the plurality of directional control valves are in neutral positions, and a controller for controlling the bleed valve to have an opening corresponding to an input amount by which the plurality of control lever units are operated.

In the hydraulic drive system thus constructed, the bleed valve functions like a center bypass throttle because the bleed valve is controlled to have an opening corresponding to the input amount of the control lever units. Accordingly, an equivalent operation feeling to that obtained in the bleed control using the open center directional control valve can be obtained while using a closed center valve as the directional control valve, thus resulting in good operability.

In the above-mentioned related arts, the bypass port 105 of the open center directional control valve and the bypass line described in JP, A, 7-63203 are both used for connecting the hydraulic fluid supply line of the hydraulic pump to the reservoir. Therefore, those port and line are referred to together as "an unloading circuit" in this Description.

### DISCLOSURE OF THE INVENTION

The above-mentioned related arts however have the problems below.

First, in the valve apparatus using the open center directional control valve shown in Fig. 11, because the bypass port (unloading circuit) 105 is blocked off upon the operation of the spool 102, the spool 102 has an overall length extended corresponding to the presence of the bypass port 105, thus raising a difficulty in machining the spool with high accuracy, and the housing 101 has an increased length in its portion where the bypass port 105 is provided, thus increasing weight and cost of the housing and also raising a difficulty in manufacture of a molding. Particularly, in a construction machine having a plurality of driven members such as a hydraulic excavator and hydraulic crane, the valve apparatus is usually constructed as a multiple valve wherein respective spools of a plurality of directional control valves are arranged side by side, and in this case the additional housing weight resulted from the presence of the bypass port is increased in proportion to the number of the spools. Accordingly, the housing weight is so increased as to cause a considerable effect upon a manufacture cost.

On the other hand, in the hydraulic drive system disclosed in JP, A, 7-63203, the above-stated problems attributable to the open center directional control valve are not encountered because the directional control valve is itself a closed center valve. However, the controller for controlling the bleed valve provided in the unloading circuit is required to develop an equivalent function to that obtained in the bleed control using the open center directional control valve by using the closed center valve, thus resulting in a higher cost.

An alternative with a closed center directional control is disclosed in document US-A 3 411 295, where however similar problems are encountered.

A first object of the present invention is to provide a hydraulic drive system and a directional control valve apparatus with which a spool can have a shorter axial length than required in an open center directional control valve, an improvement in machining accuracy and a more compact structure can be realized, and an equivalent function to that obtained by the open center directional control valve can be developed with no need of using a controller.

A second object of the present invention is to provide a directional control valve apparatus which is constructed as a multiple valve including a plurality of spools arranged side by side, which can develop an equivalent function to that obtained by the open center directional control valve, which can make a housing lighter and more compact than the case of using an open center directional control valve, and which can be manufactured at a reduced cost.

Features of the present invention to achieve the above objects and other associated features are as defined in independent claim 1.

In the present invention thus constructed, when the directional control valve is operated, the opening of the pilot variable throttle is changed by the operation interlock means depending on the operation amount of the directional control valve, and the rate of the pilot flow passing the pilot circuit is also changed. When the rate of the pilot flow is reduced, the opening of the logic valve is also reduced, whereupon the hydraulic fluid drained to the reservoir through the unloading circuit is gradually throttled to raise the delivery pressure of the hydraulic pump. When the pump delivery pressure becomes higher than the load pressure of the actuator, part of the hydraulic fluid delivered from the hydraulic pump is drained to the reservoir through the unloading circuit while the remaining hydraulic fluid is supplied to the actuator. When the logic valve is fully closed, all of the hydraulic fluid delivered from the hydraulic pump is supplied to the actuator.

Thus, with the present invention, an equivalent function to that obtained in the bleed control using an open center directional control valve can be obtained by using the closed center directional control valve, and that function can be achieved without using a controller.

Since the throttle and cutoff means in a combination of the logic valve and the pilot variable throttle is used, even the case of developing an equivalent function to that obtained by open center directional control valves in a hydraulic circuit including a plurality of actuators can be easily coped with by connecting a plurality of pilot variable throttles in series without using a controller.

Further, since the directional control valve is itself a closed center valve while developing an equivalent function to that obtained by an open center directional control valve, it is possible to shorten the overall length of a spool of the directional control valve to such an extent as corresponding to no need of a bypass port, improve the machining accuracy, and make a housing of the directional control valve more compact.

With the construction of the logic valve causing the pilot flow to pass the feedback slit, the opening of the logic valve is controlled to increase and decrease depending on an increase and decrease in the rate of the pilot flow.

In the invention, preferably, the operation interlock means reduces the opening of the pilot variable throttle as the operation amount of the directional control valve increases.

With that feature, as the operation amount of the directional control valve increases, the opening of the pilot variable throttle is reduced and the rate of the pilot flow passing the feedback slit of the logic valve is controlled to decrease.

In the invention, preferably, the hydraulic drive system further comprises a pilot valve for outputting a pilot pressure as an operation signal and driving the directional control valve, and the operation interlock means comprises means for introducing the same pilot pressure as output from the pilot valve to the directional control valve and the pilot variable throttle of the throttle and cutoff means.

By constructing the directional control valve and the pilot variable throttle of the throttle and cutoff means to be of the hydraulic pilot type, the directional control valve and the pilot variable throttle can be easily operated in an interlock manner.

In the invention, preferably, the actuator and the directional control valve are each provided in plural number, and the pilot variable throttle of the throttle and cutoff means is provided in plural number corresponding to the plurality of directional control valves, the plurality of pilot variable throttles being connected in series.

With that feature, an equivalent function to that obtained by an open center directional control valve can be achieved, as stated in the invention, for each of combinations of the directional control valves and the pilot variable throttles. In addition, an equivalent function to that obtained by a conventional multiple open center directional control valve can be realized.

In the invention, preferably, flow rate detecting means for detecting the rate of the pilot flow is disposed between the pilot variable throttle of the throttle and cutoff means and said reservoir, a delivery rate of the hydraulic pump being regulated by using a signal generated by the flow rate detecting means.

With that feature, an equivalent function to that obtained by the conventional open center directional control valve can be achieved. In addition, since the pilot flow passes the flow detecting means at a small rate, the flow rate detecting means can be reduced in size and improved in reliability.

In the invention, preferably, a relief valve is disposed in parallel to the pilot variable throttle of the throttle and cutoff means.

By providing the relief valve to release the pilot flow instead of a conventional large-sized relief valve which has been used to release a large flow rate supplied from the hydraulic pump, the relief valve can be reduced in size and the construction of the hydraulic drive system can be further simplified.

Also, to achieve the above first object, a directional control valve apparatus according to claim 7 has been defined.

In the present invention thus constructed, when the main spool is operated, the sub-spool is displaced by the operation interlock means to reduce the opening of the pilot variable throttle, whereupon the rate of the pilot flow passing the feedback slit of the logic valve is reduced and the opening of the logic valve is also reduced. Accordingly, as stated in the above (1), part of the hydraulic fluid delivered from the hydraulic pump is drained to the reservoir through the unloading circuit while the remaining hydraulic fluid is supplied to the actuator. Thus, an equivalent function to that obtained by an open center directional control valve can be achieved without using a controller.

Further, as stated in the invention as defined in claim 7, even the case of employing a hydraulic circuit including a plurality of actuators can be easily coped with, and an improvement in machining accuracy and a more compact structure can be realized.

In the invention as defined in claim 7, preferably, the operation interlock means comprises means for communicating pilot pressure bearing chambers defined at both ends of the main spool respectively with pilot pressure bearing chambers defined at both ends of the sub-spool.

With that feature, the directional control valve and the pilot variable throttle can be easily operated in an interlock manner by using the same pilot pressure.

In the invention as defined in claim 7, preferably, the main spool and the sub-spool are arranged in the housing parallel to each other.

With that feature, opposite ends of the main spool and the sub-spool are positioned to face the same opposite housing surfaces so that the operation interlock means can be mounted to each of those housing surfaces and the interlock structure for both the spools can be more easily realized.

In the invention as defined in claim 7, preferably, the directional control valve apparatus further comprises a load check valve disposed in an inlet portion of the main spool for preventing a hydraulic fluid from flowing backward from the load ports to the feeder port, the sub-spool being arranged parallel to the main spool on the side opposite to the load check valve with the main spool positioned therebetween.

With that feature, when installing the sub-spool, the sub-spool can be rationally arranged in a free space inside the housing without causing interference with the load check valve. In addition, as stated in the above (10), the operation interlock means for the main spool and the sub-spool can be easily constructed.

To achieve the above second object, according to the invention as defined in claim 7, the valve apparatus is constructed as a multiple valve including a plurality of main spools arranged side by side, and corresponding plural sets of combination of the main spools and sub-spools are installed in the valve housing, the plurality of sub-spools being connected in series.

With that feature, an equivalent function to that obtained by an open center directional control valve can be achieved for each of combinations of the main spools and the sub-spools, and in addition an equivalent function to that obtained by a conventional multiple open center directional control valve can be realized.

Further, in the valve apparatus constructed as a multiple valve including a plurality of main spools arranged side by side, a weight reduction of the housing to such an extent as corresponding to no need of a bypass port can be achieved in proportion to the number of the main spools. Accordingly, the housing can be greatly reduced in weight and size and the manufacture cost can be considerably cut down.

In the invention as defined in claim 7, preferably, flow rate detecting means for detecting the rate of the pilot flow is disposed between the sub-spool and the reservoir port, a delivery rate of the hydraulic pump being regulated by using a signal generated by the flow rate detecting means.

With that feature, as stated in the above (5), the flow rate detecting means can be reduced in size and improved in reliability.

In the invention as defined in claim 7, a relief valve is disposed in parallel to the sub-spool.

With that feature, as stated in the above (6), the relief valve can be reduced in size and the construction of the hydraulic drive system can be further simplified.

### BRIEF DESCRIPTION OF THE DRAWINGS

Fig. 1 is a hydraulic circuit diagram of a hydraulic drive system and a directional control valve apparatus according to a first embodiment of the present invention.
Fig. 2 is a sectional view of a directional control valve apparatus, shown in Fig. 1, sectioned along a plane including a main spool and a sub-spool.
Fig. 3 is a sectional view of the directional control valve apparatus, shown in Fig. 1, sectioned along a plane including a valve body of a logic valve.
Fig. 4 is a hydraulic circuit diagram of a hydraulic drive system and a directional control valve apparatus according to a second embodiment of the present invention.
Fig. 5 is a hydraulic circuit diagram of a hydraulic drive system and a directional control valve apparatus according to a third embodiment of the present invention.
Fig. 6 is a sectional view of a directional control valve apparatus, shown in Fig. 5, sectioned along a plane including one main spool and one sub-spool.
Fig. 7 is a sectional view taken along the line VII - VII in Fig. 6, the view showing the correlation of main spools in arrangement.
Fig. 8 is a sectional view showing the connection of pilot passages.
Fig. 9 is a hydraulic circuit diagram of a hydraulic drive system and a directional control valve apparatus according to a fourth embodiment of the present invention.
Fig. 10 is a hydraulic circuit diagram of a hydraulic drive system and a directional control valve apparatus according to a fifth embodiment of the present invention.
Fig. 11 is a sectional diagram showing the structure of a conventional valve apparatus including an open center directional control valve.

### BEST MODE FOR CARRYING OUT THE INVENTION

Hereunder, embodiments of the present invention will be described with reference to the drawings.

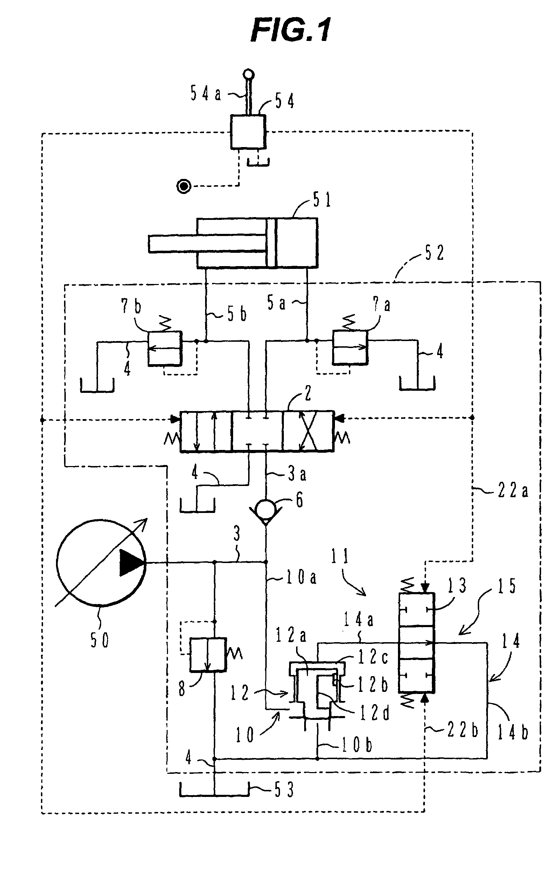

To begin with, a first embodiment of the present invention will be described with reference to Figs. 1 - 3.

In Fig. 1, a hydraulic drive system of this embodiment comprises a hydraulic pump 50, a hydraulic actuator 51 driven by a hydraulic fluid delivered from the hydraulic pump 50, a directional control valve apparatus 52 for controlling a flow of the hydraulic fluid supplied from the hydraulic pump 50 to the actuator 51, and a reservoir 53.

The directional control valve apparatus 52 comprises a main spool 2 constituting a closed center directional control valve, a feeder port 3 and an inlet port 3a both connected to the hydraulic pump and constituting a hydraulic supply line, a reservoir port 4 connected to the reservoir 53, load ports 5a, 5b connected to the actuator, a load check valve 6 for preventing the hydraulic fluid from flowing backward from the load ports 5a, 5b to the feeder port 3, overload relief valves 7a, 7b connected respectively to the load ports 5a, 5b, and a main relief valve 8 for limiting a maximum pressure in the circuit. Note that although the reservoir port 4 associated with the main spool 2 and the reservoir ports 4 associated with the overload relief valves 7a, 7b are shown separately from the reservoir port 4 downstream of the main relief valve 8 and correspondingly the reservoirs are also shown separately from the reservoir 53 downstream of the main relief valve 8 in Fig. 1 for convenience of illustration, those reservoir ports and reservoirs are in fact formed respectively as a single reservoir port and a single reservoir.

The main spool 2 communicates the feeder port 3 with the load port 5a or 5b and the load port 5b or 5a with the reservoir port 4 depending on the direction in which it is operated. Also, the main spool 2 is provided with meter-in and meter-out variable throttles (described later) so that the flow rate of the hydraulic fluid flowing from the feeder port 3 to the load port 5a or 5b and the flow rate of the hydraulic fluid flowing from the load port 5a or 5b to the reservoir port 4 are controlled depending on the displacement (stroke) of the main spool 2.

In this embodiment, the main spool 2 is operated by using a pilot pressure given as an output of a pilot valve 54, and when a control lever 54a of the pilot valve 54 is operated, the output pressure of the pilot valve 54 is applied to a corresponding end of the main spool 2 for shifting the main spool 2.

The directional control valve apparatus 52 further includes an unloading circuit 10 interconnecting the feeder port 3 and the reservoir port 4. The unloading circuit 10 comprises a passage 10a as part of the feeder port 3 and a passage 10b connected to the reservoir port 4. Between the passages 10a and 10b, there is provided throttle and cutoff means 11 for throttling and cutting off the unloading circuit 10 depending on an amount (stroke) by which the main spool 2 is operated.

In this embodiment, the throttle and cutoff means 11 is made up of a logic valve 12 and a pilot circuit 15 having a sub-spool 13.

The logic valve 12 has a valve body 12a of the seat valve type for opening and closing the unloading circuit. The valve body 12a is provided with a feedback slit 12b whose opening area increases and decreases depending on an amount by which the valve body 12a is moved. An end of the valve body 12a opposite to an outlet of the logic valve 12 (the passage 10b) is positioned to face a back pressure chamber 12c, and an inlet of the logic valve 12 (the passage 10a) is communicated with the back pressure chamber 12c through both a passage 12d formed in the valve body 12a and the feedback slit 12b.

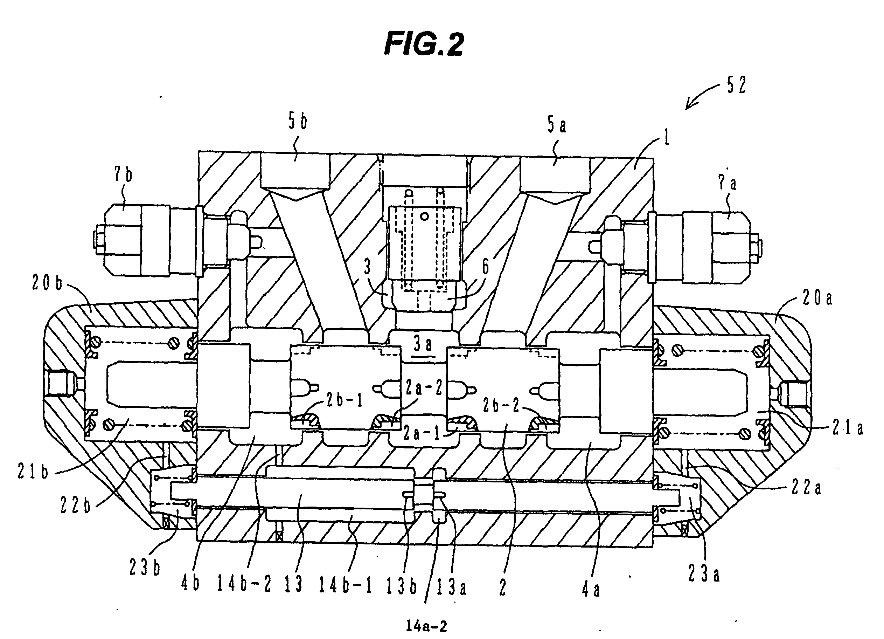

The pilot circuit 15 has a pilot passage 14 and the sub-spool 13 is disposed between passage portions 14a and 14b of the pilot passage 14. The passage portion 14a of the pilot passage 14 is connected to the back pressure chamber 12c, and the passage portion 14b of the pilot passage 14 is connected to the reservoir port 4. The same output pressure of the pilot valve 54 (pilot pressure) as applied to the main spool 2 is also applied to both ends of the sub-spool 13 through passages 22a, 22b serving as operation interlock means. The pilot pressure acts to move the sub-spool 13 depending on the operation amount of the main spool 2 to change openings (opening areas) of pilot variable throttles 13a, 13b (see Fig. 2, described later) provided in the sub-spool 13. Stated otherwise, when the sub-spool 13 is in a neutral position as shown, the pilot variable throttles each have a maximum opening, and when the sub-spool 13 is moved in either direction from the neutral position as shown, the opening of the pilot variable throttle is reduced depending on the amount of movement of the sub-spool 13.

In accordance with change in opening of the pilot variable throttle of the sub-spool 13, a pilot flow passing the feedback slit 12b of the logic valve 12 is changed and the opening area of the logic valve 12 in communication with the reservoir port 4 is controlled. After passing the feedback slit 12b of the logic valve 12, the pilot flow is drained to the reservoir port 4 through the back pressure chamber 12c, the pilot passage 14a, the pilot variable throttle provided in the sub-spool 13, and the pilot passage 14b. By throttling the opening of the pilot variable throttle to restrict a rate of the pilot flow, the pressure in the back pressure chamber 12c of the logic valve 12 is raised, whereupon the valve body 12a of the logic valve 12 is moved downward on the drawing to restrict an opening of the logic valve 12 (an opening amount of the unloading circuit 10). When the pilot variable throttle of the sub-spool 13 is brought into a closed state, the logic valve 12 is substantially closed and the unloading circuit 10 is closed.

It is to be noted that the above-stated operation of the logic valve 12 and the sub-spool 13 is known from JP, A, 6-193604.

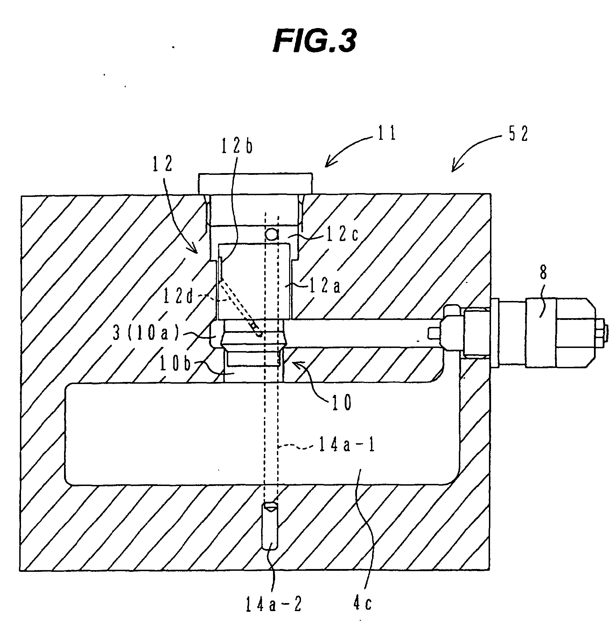

One example of the structure of the directional control valve apparatus 52 is shown in Figs. 2 and 3.

Fig. 2 shows a section of the directional control valve apparatus 52 sectioned along a plane passing the axes of the main spool 2 and the sub-spool 13. The main spool 2 and the sub-spool 13 are slidably fitted in a housing 1. The housing 1 has formed therein the feeder port 3 connected to the hydraulic pump 50 (see Fig. 1), the load ports 5a, 5b connected to the actuator 51 (see Fig. 1), and reservoir ports 4a, 4b through which the return hydraulic fluid from the load ports 5a, 5b are drained upon the operation of the main spool 2. A load check valve 6 is disposed between the feeder port 3 and the inlet port 3a, and the overload relief valves 7a, 7b are disposed respectively in the load ports 5a, 5b. The feeder port 3 is extended in a direction perpendicular to the drawing sheet.

The main spool 2 is provided with meter-in variable throttles (notches) 2a-1, 2a-2 and meter-out variable throttles (notches) 2b-1, 2b-2 formed as shown. When the main spool 2 is moved to the right on the drawing, the hydraulic fluid in the feeder port 3 pushes up the load check valve 6 and flows into the inlet port 3a. From the inlet port 3a, the hydraulic fluid flows into the load port 5a through the meter-in variable throttle 2a-1 and is then supplied to the actuator 51 (see Fig. 1). The return hydraulic fluid from the actuator 51 flows from the load port 5b into the reservoir port 4b through the meter-out variable throttle 2b-1 and is then returned to the reservoir 53 (see Fig. 1). The above explanation is also equally applied to when the main spool 2 is moved to the left on the drawing. In this case, however, the hydraulic fluid from the inlet port 3a is supplied to the actuator 51 (see Fig. 1) through the meter-in variable throttle 2a-2 and the return hydraulic fluid from the actuator 51 is returned to the reservoir 53 (see Fig. 1) through the meter-out variable throttle 2b-2 and the reservoir port 4a.

The sub-spool 13 is provided with the pilot variable throttles (notches) 13a, 13b formed in a central portion thereof. The variable throttle 13a is positioned at one end of a pilot passage 14a-2 extended in the direction perpendicular to the drawing sheet, and the variable throttle 13b is positioned at one end of a pilot passage 14b-1 formed along an outer periphery of the sub-spool 13, the other end of the pilot passage 14b-1 being connected to the reservoir port 4b through a pilot passage 14b-2.

The main spool 2 and the sub-spool 13 are fitted to extend parallel to each other. The output pressure of the pilot valve 54 (see Fig. 1) is introduced to one of main pressure bearing chambers 21a, 21b defined in pilot caps 20a, 20b for being applied to the main spool 2, and at the same time introduced to one of sub-pressure bearing chambers 23a, 23b through passages 22a, 22b provided in the pilot caps 20a, 20b for being applied to the sub-spool 13.

Fig. 3 is a sectional view sectioned along a plane passing the logic valve 12. A portion of the feeder port 3 is extended as the passage 10a to the inlet of the logic valve 12 of the throttle and cutoff means 11, and the valve body 12a of the logic valve 12 is positioned between the passage 10a and the passage 10b communicating with a reservoir port 4c. The valve body 12a has the feedback slit 12b and the passage 12d. An end of the valve body 12a opposite to the passage 10b is positioned to face the back pressure chamber 12c which is connected to the pilot passage 14a-2 through a pilot passage 14a-1.

The pilot passages 14a-1, 14a-2 correspond to the passage portion 14a of the pilot passage 14 shown in Fig. 1, and the pilot passages 14b-1, 14b-2 correspond to the passage portion 14b of the pilot passage 14 shown in Fig. 1. Moreover, the reservoir ports 4a, 4b, 4c are all connected to the reservoir port 4 shown in Fig. 1.

As explained above, when the opening of the pilot variable throttle 13a, 13b of the sub-spool 13 shown in Fig. 2 is changed, the pilot flow passing the feedback slit 12b of the logic valve 12 shown in Fig. 3 is changed and the position of the valve body 10a of the logic valve 12 in the vertical direction on the drawing is changed and hence the opening of the logic valve 12, i.e., the opening amount of the unloading circuit 10, is controlled.

After passing the feedback slit 12b of the logic valve 12 shown in Fig. 3, the pilot flow is drained to the reservoir port 4b through the back pressure chamber 12c, the pilot passages 14a-1 and 14a-2 (14a), the pilot variable throttle 13a or 13b provided in the sub-spool 13, and the pilot passages 14b-1 and 14b-2 (14b).

When the sub-spool 13 is operated to reduce the opening of the pilot variable throttle 13a or 13b, the pilot flow is restricted and the pressure in the back pressure chamber 12c of the logic valve 12 is raised, whereupon the valve body 12a of the logic valve 12 is moved downward on the drawing to restrict the opening amount of the unloading circuit 10. When the pilot variable throttle 13a or 13b of the sub-spool 13 is brought into a closed state, the unloading circuit 10 is substantially closed.

Further, in Fig. 3, the relief valve 8 is disposed between the feeder port 3 and the reservoir port 4c.

In this embodiment thus constructed, when the control lever 54a of the pilot valve 54 is not operated, the meter-in variable throttles 2a-1 and 2a-2 of the main spool 2 of the directional control valve are closed, the pilot variable throttles 13a and 13b of the sub-spool 13 are opened at a maximum opening, and the valve body 12a of the logic valve 12 is in a maximum opening position. Therefore, all of the hydraulic fluid delivered from the hydraulic pump 50 flows into the reservoir 53 through the logic valve 12 and the reservoir port 4.

When the operator manipulates the control lever 54a of the pilot valve 54 in the above condition, the pilot pressure is produced depending on the direction and amount in and by which the control lever 54a is operated, and applied to the main spool 2 of the directional control valve. At the same time, the pilot pressure is also applied to the sub-spool 13 of the throttle and cutoff means 11. Accordingly, the meter-in variable throttle 2a-1 or 2a-2 of the main spool 2 is opened and the opening of the pilot variable throttle 13a or 13b of the sub-spool 13 is reduced such that the main spool 2 and the sub-spool 13 are operated to provide respective openings corresponding to the same pilot pressure. Thus, the opening of the logic valve 12 is reduced and as the output pressure of the pilot valve 54 rises, the hydraulic fluid drained to the reservoir 53 from the hydraulic pump 50 is gradually throttled to raise the delivery pressure of the hydraulic pump 50. When the pump delivery pressure becomes higher than the load pressure of the actuator 51, part of the hydraulic fluid delivered from the hydraulic pump 50 is supplied to the actuator 51 through the meter-in variable throttle 2a-1 or 2a-2 of the main spool 2. As the opening of the logic valve 12 reduces, the flow rate supplied to the actuator 51 is increased. When the pilot variable throttle 13a or 13b of the sub-spool 13 is fully closed and the logic valve 12 is also fully closed, all of the hydraulic fluid delivered from the hydraulic pump 50 is supplied to the actuator 51.

With this embodiment, therefore, an equivalent function to that obtained by the open center directional control valve can be achieved by using the closed center directional control valve (the main spool 2) and good operability is resulted. Further, that function can be realized without using a controller.

Since a bleed valve of the unloading circuit 10 is constituted by the throttle and cutoff means 11 in a combination of the logic valve 12 and the sub-spool 13, even the case of developing an equivalent function to that obtained by the open center directional control valves in a hydraulic circuit including a plurality of actuators can be easily coped with, as will be apparent from an embodiment described later, by connecting a plurality of sub-spools 13 in series without using a controller.

Also, since the directional control valve is itself a closed center valve while developing an equivalent function to that obtained by the conventional open center directional control valve, it is possible to improve the problems attributable to the open center directional control valve (i.e., such problems that the main spool has an increased overall length, thus raising a difficulty in machining the main spool with high accuracy, and that the housing 1 has an increased length in its portion where the unloading circuit is arranged, thus increasing weight and cost of the housing and also raising a difficulty in manufacture of a molding). As a result, an improvement in machining accuracy and a more compact structure can be realized and the manufacture cost of the directional control valve apparatus can be cut down in combination with no need of a controller.

Further, since the valve apparatus can be designed to have a smaller ratio L/D of an outer diameter D to an overall length L of the main spool 2, effects caused by bending of a bore occurred in machining of the housing and bending of the spool itself can be made smaller. As a result, the valve apparatus can be designed with a smaller clearance in design drawings than conventional, and hence an oil-tight ability, which has been a technical problem specific to directional control valves of the spool type, can be remarkably improved. In addition, since the housing can be designed to have a smaller size and heat is more quickly propagated, it is also possible to eliminate a trouble of spool seizure that may occur by a heat shock due to thermal unbalance.

Moreover, in this embodiment, the directional control valve is of the hydraulic pilot type and both the main spool 2 and the sub-spool 13 can be easily operated in an interlock manner by using the same pilot pressure.

Especially, since the main spool 2 and the sub-spool 13 are arranged parallel to each other, opposite ends of the main spool 2 and the sub-spool 13 are positioned to face the same opposite housing surfaces so that the pilot cap 20 common to both the spools can be mounted to each of those housing surfaces and the interlock structure for both the spools can be more easily realized.

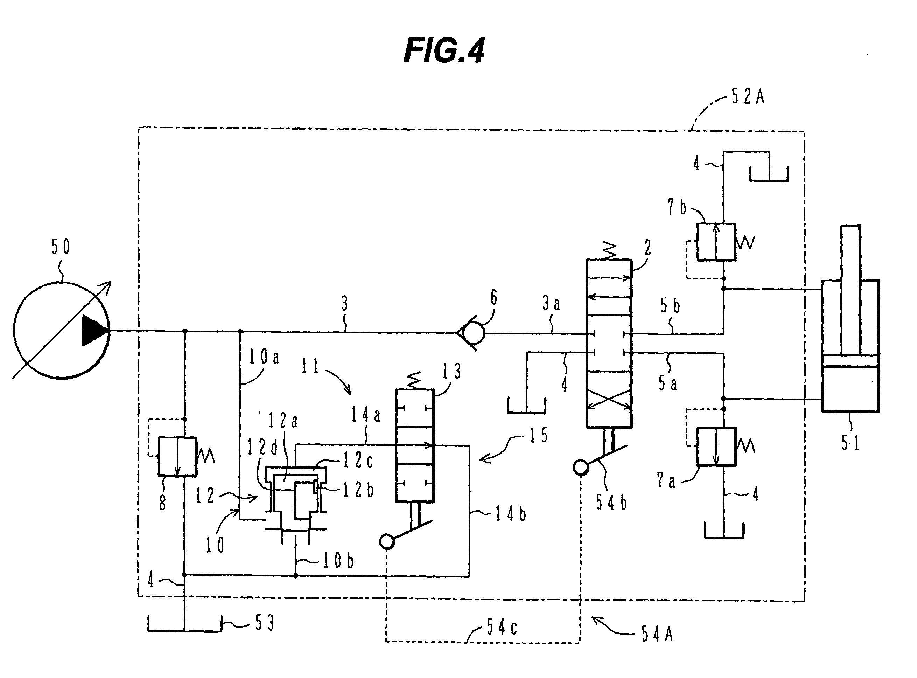

A second embodiment of the present invention will be described with reference to Fig. 4. In this embodiment, the main spool and the sub-spool are mechanically interlocked with each other. In Fig. 4, equivalent members to those shown in Fig. 1 are denoted by the same reference numerals.

Referring to Fig. 4, denoted by 52A is a directional control valve apparatus for use in a hydraulic drive system of this embodiment. The directional control valve apparatus 52A has a mechanical control lever unit 54A instead of the pilot valve 54 shown in Fig. 1. The control lever unit 54A comprises a control lever 54b mechanically coupled to the main spool 2 and an operation interlock mechanism 54c for transmitting motion of the control lever 54b. When the control lever 54b is operated, the main spool 2 is mechanically operated depending on the direction and amount in and by which the control lever 54b is operated, and at the same time the movement of the main spool 2 is transmitted to the sub-spool 13. Thus, the sub-spool 13 is also mechanically operated depending on the operation amount of the main spool 2.

This embodiment can also provide similar advantages as obtainable with the first embodiment.

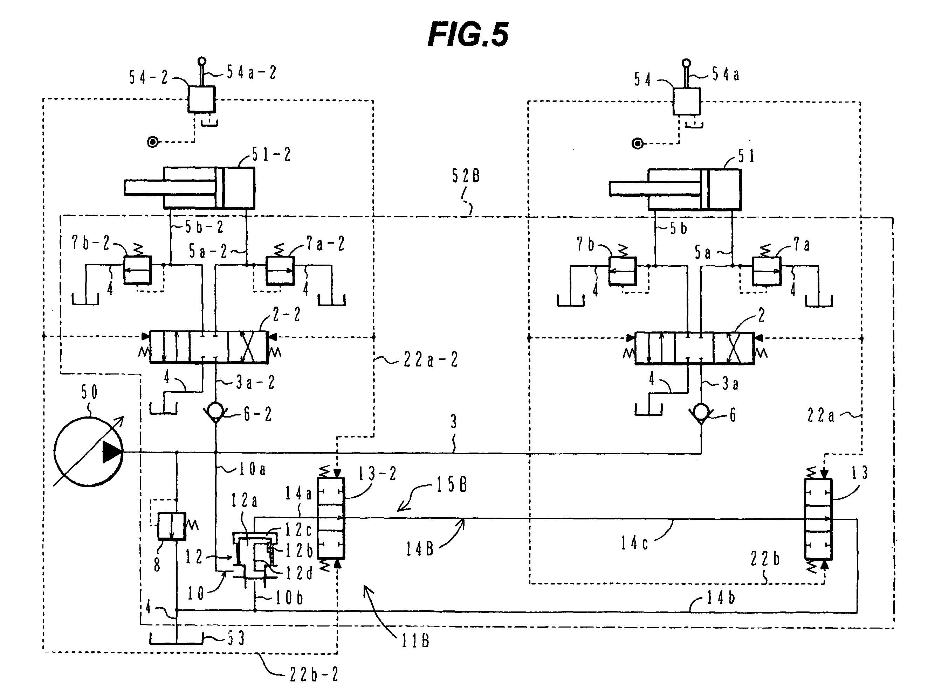

A third embodiment of the present invention will be described with reference to Figs. 5 to 8. This embodiment intends to realize the function of a conventional multiple directional control valve by combinations of plural main spools and plural sub-spools. In Figs. 5 to 8, equivalent members to those shown in Figs. 1 and 2 are denoted by the same reference numerals.

Referring to Fig. 5, a hydraulic drive system of this embodiment includes, in addition to the actuator 51, another actuator 51-2 as a hydraulic actuator driven by the hydraulic fluid delivered from the hydraulic pump 50. Correspondingly, a directional control valve apparatus 52B is constructed as follows.

The main spool 2 and a main spool 2-2 are connected in parallel to the feeder port 3 connected to the hydraulic pump 50 of the directional control valve apparatus 52B. In a pilot circuit 15B of throttle and cutoff means 11B, the sub-spool 13 operated in interlock with the main spool 2 and a sub-spool 13-2 operated in interlock with the main spool 2-2 are connected to a pilot passage 14B in series. As with the main spool 2, an inlet port 3a-2, load ports 5a-2, 5b-2, a load check valve 6-2, and overload relief valves 7a-2, 7b-2 are provided for the main spool 2-2.

Here, the sub-spool 13-2 is disposed between passage portions 14a and 14c of the pilot passage 14B, and the sub-spool 13 is disposed downstream of the sub-spool 13-2 between passage portions 14c and 14a of the pilot passage 14B. The same output pressure of a pilot valve 54-2 (pilot pressure) as applied to the main spool 2-2 is also applied to both ends of the sub-spool 13-2. The pilot pressure acts to move the sub-spool 13-2 depending on the operation amount of the main spool 2-2 to change openings (opening areas) of pilot variable throttles (described later) provided in the sub-spool 13-2. Stated otherwise, when the sub-spool 13-2 is in a neutral position as shown, the pilot variable throttles each have a maximum opening, and when the sub-spool 13-2 is moved in either direction from the neutral position as shown, the opening of the pilot variable throttle is reduced depending on the amount of movement of the sub-spool 13-2.

In the above construction, when the control lever 54a or 54a-2 of one of the pilot valves 54, 54-2 is operated to shift one of the main spools 2, 2-2, the corresponding sub-spool 13, 13-2 is moved to restrict the pilot flow and raise the pressure in the back pressure chamber 12c of the logic valve 12, whereupon the valve body 12a of the logic valve 12 is moved downward on the drawing to restrict the opening of the logic valve 12 (the opening amount of the unloading circuit 10). When the pilot variable throttle of the sub-spool 13 or 13-2 is brought into a closed state, the logic valve 12 is substantially closed and the unloading circuit 10 is closed.

Also, when both the control levers 54a, 54a-2 of the pilot valves 54, 54-2 are half-operated to operate the main spools 2, 2-2, the sub-spools 13, 13-2 are also operated correspondingly. At this time, because of the control levers 54a, 54a-2 being half-operated, the sub-spools 13, 13-2 are each likewise half-operated to restrict the pilot flow in accordance with the opening of the pilot variable throttle corresponding to the amount of movement of the sub-spool, thereby restricting the opening of the logic valve 12 (the opening amount of the unloading circuit 10). The above operation is equivalent to the operation obtained, in a system in which bypass ports of a plurality of open center directional control valves are connected in series, from the presence of the bypass ports when half-operating directional control valves. Thus, even when both the actuators 51, 51-2 are driven for the combined operation, equivalent control to that obtained in the bleed control using the open center directional control valves can be made by using the closed center directional control valves (the main spool 2,2-2).

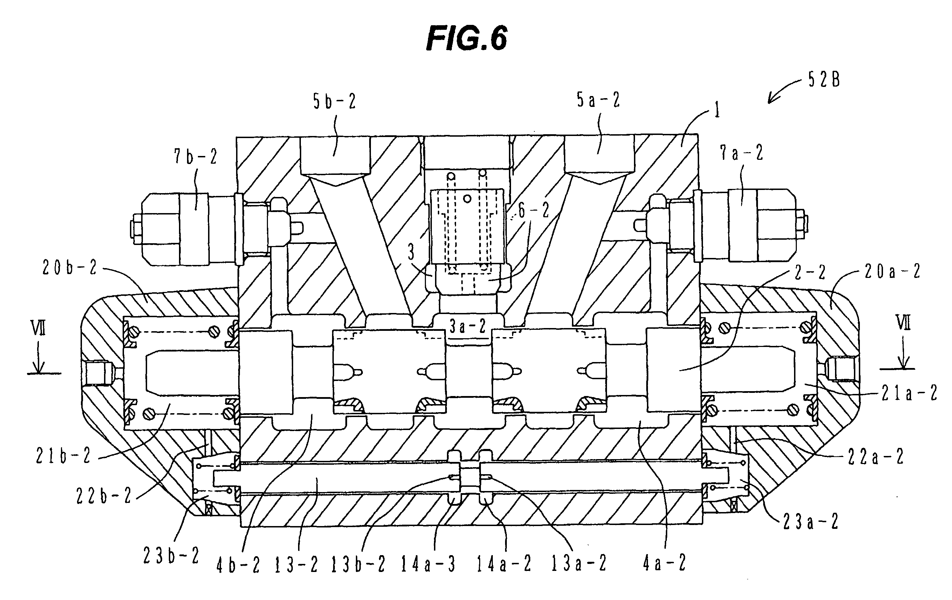

One example of the structure of the directional control valve apparatus 52B will be described with reference to Figs. 6 to 8, as well as Figs. 2 and 3 in connection with the first embodiment.

The structure of portions relating to the main spool 2 and the sub-spool 13 of the directional control valve apparatus 52B is essentially the same as that in the first embodiment explained above with reference to Fig. 2. However, the pilot passage 14a-2 in Fig. 2 is replaced by a pilot passage 14a-3 described later.

Also, the structure of a portion relating to the logic valve 12 of the throttle and cutoff means 11B of the directional control valve apparatus 52B is the same as that in the first embodiment explained above with reference to Fig. 3.

The structure of portions relating to the main spool 2-2 and the sub-spool 13-3 of the directional control valve apparatus 52B is shown in Fig. 6.

Fig. 6 shows a section of the directional control valve apparatus 52B sectioned along a plane passing the axes of the main spool 2-2 and the sub-spool 13-2. The main spool 2-2 and the sub-spool 13-2 are slidably fitted in the housing 1. The housing 1 has formed therein the load ports 5a-2, 5b-2 connected to the actuator 51-2 (see Fig. 5) and reservoir ports 4a-2, 4b-2 through which the return hydraulic fluid from the load ports 5a-2, 5b-2 are drained upon the operation of the main spool 2-2. The load check valve 6-2 is disposed between the feeder port 3 and the inlet port 3a-2, and the overload relief valves 7a-2, 7b-2 are disposed respectively in the load ports 5a-2, 5b-2. The feeder port 3 is extended in a direction perpendicular to the drawing sheet and connected to the feeder port 3 shown in Fig. 2.

The structure of the main spool 2-2 is essentially the same as that of the main spool 2 in the first embodiment shown in Fig. 2.

The sub-spool 13-2 is provided with pilot variable throttles (notches) 13a-2, 13b-2 formed in a central portion thereof. The variable throttle 13a-2 is positioned at one end of the pilot passage 14a-2 extended in the direction perpendicular to the drawing sheet, and the variable throttle 13b-2 is positioned at one end of the pilot passage 14a-3.

The main spool 2-2 and the sub-spool 13-2 are fitted to extend parallel to each other. The output pressure of the pilot valve 54-2 (see Fig. 5) is introduced to one of main pressure bearing chambers 21a-2, 21b-2 defined in pilot caps 20a-2, 20b-2 for being applied to the main spool 2-2, and at the same time introduced to one of sub-pressure bearing chambers 23a-2, 23b-2 through passages 22a-2, 22b-2 provided in the pilot caps 20a-2, 20b-2 for being applied to the sub-spool 13-2.

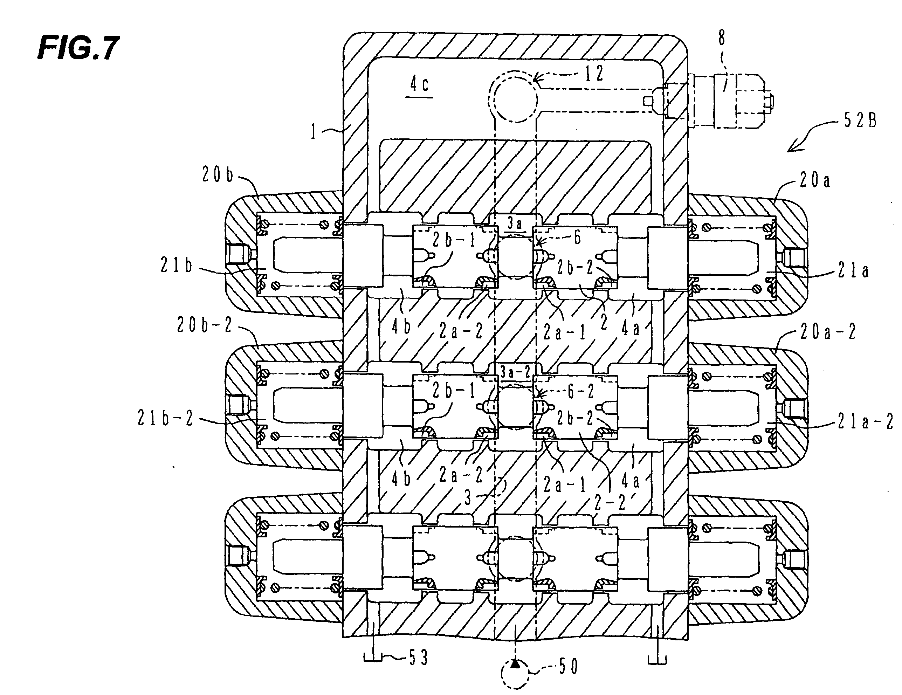

Fig. 7 is a sectional view taken along the line VII - VII in Fig. 6, the view showing the correlation of the main spools 2, 2-2 and the logic valve 12. The main spools 2, 2-2 are arranged in the housing 1 along with other main spools parallel to one another, thereby constructing a multiple valve. The reservoir port 4c is formed in the upper side of the housing 1 on the drawing, and the logic valve 12 is positioned in the reservoir port 4c above the drawing sheet, as indicated by a two-dot-chain line.

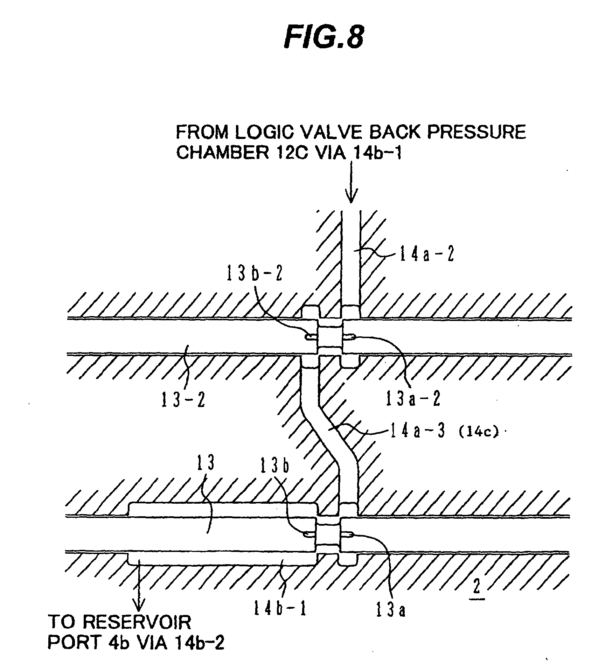

Fig. 8 is a view showing the correlation of the pilot passages 14a-2, 14a-3, 14b-1. The pilot passage 14a-2 is connected to the back pressure chamber 12c of the logic valve 12 through the pilot passage 14a-1 shown in Fig. 3, and the pilot passage 14a-3 connects the variable throttle 13b-2 of the sub-spool 13-2 and the variable throttle 13a of the sub-spool 13 with each other. The pilot passages 14a-1, 14a-2 correspond to the passage portion 14a of the pilot passage 14B shown in Fig. 5, the pilot passage 14a-3 corresponds to the passage portion 14c of the pilot passage 14B shown in Fig. 5, and the pilot passages 14b-1, 14b-2 correspond to the passage portion 14b of the pilot passage 14B shown in Fig. 5. Moreover, the reservoir ports 4a, 4b, 4c, 4a-2, 4b-2 are all connected to the reservoir port 4 shown in Fig. 1.

As explained above, when one of the sub-spool 13 shown in Fig. 2 and the sub-spool 13-2 shown in Fig. 6 is operated, the pilot flow passing the feedback slit 12b of the logic valve 12 shown in Fig. 3 is changed and the position of the valve body 10a of the logic valve 12 in the vertical direction on the drawing is changed and hence the opening of the logic valve 12, i.e., the opening amount of the unloading circuit 10, is controlled.

After passing the feedback slit 12b of the logic valve 12 shown in Fig. 3, the pilot flow is drained to the reservoir port 4b through the back pressure chamber 12c, the pilot passages 14a-1 and 14a-2 (14a), the pilot variable throttle 13a-2 or 13b-2 provided in the sub-spool 13-2, the pilot passage 14a-3 (14c), the pilot variable throttle 13a or 13b provided in the sub-spool 13, and the pilot passages 14b-1 and 14b-2 (14b).

When the sub-spool 13 or 13-1 is operated to reduce the opening of one of the pilot variable throttles 13a, 13b, 13a-2, 13b-2, the pilot flow is restricted and the pressure in the back pressure chamber 12c of the logic valve 12 is raised, whereupon the valve body 12a of the logic valve 12 is moved downward on the drawing to restrict the opening amount of the unloading circuit 10. When the variable throttle of the sub-spool 13 or 13-2 is brought into a closed state, the unloading circuit 10 is substantially closed.

With this embodiment, as described above, the equivalent function, explained in connection with the first embodiment, to that obtained by the open center directional control valve can be achieved for each of combinations of plural main spools and plural sub-spools; hence similar advantages as obtainable with the first embodiment can be obtained. In addition, the function of a conventional multiple open center directional control valve can be realized by combinations of plural main spools and plural sub-spools.

Further, with this embodiment wherein the valve apparatus 52B is constructed as a multiple valve, the weight of the housing 1 is reduced in proportion to the number of the spools corresponding to a weight reduction of the unloading circuit for each of the conventional open center directional control valves. As a result, the housing 1 can be greatly reduced in weight and size and the manufacture cost can be considerably cut down.

Note that, by adding the combination of the main spool and the sub-spool shown in Fig. 2, the valve apparatus can be constructed to include any desired number of directional control valves.

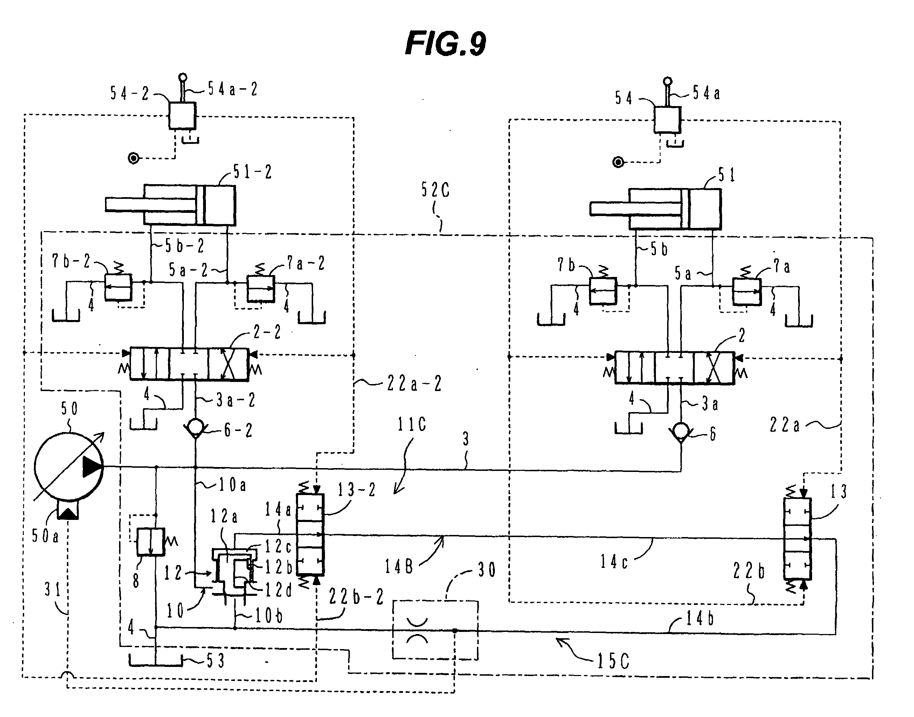

A fourth embodiment of the present invention will be described with reference to Fig. 9. In Fig. 9, equivalent members to those shown in Figs. 1 and 5 are denoted by the same reference numerals.

In a conventional combination of an open center directional control valve and flow rate control for a hydraulic pump, it is general that a throttle with a relief function, for example, is provided as flow rate detecting means in an unloading circuit through which all of a hydraulic fluid delivered from a hydraulic pump passes, and the displacement of the hydraulic pump is controlled in response to a signal from the flow rate detecting means.

Such a conventional method has however had a problem that the hydraulic fluid delivered from the hydraulic pump passes the flow rate detecting means (throttle) at a full flow rate sometimes, which results in a larger size and poor reliability of the flow rate detecting means itself.

This embodiment intends to solve the above problem as well. A pilot circuit 15C of throttle and cutoff means 11C included in a directional control valve apparatus 52C shown in Fig. 9 is arranged such that flow rate detecting means, e.g., a throttle 30, for detecting a rate of the pilot flow passing the pilot passage 14B is disposed in the pilot passages 14b between the downstream sub-spool 13 and the reservoir port 4. A pressure signal generated by the throttle 30 is introduced to a regulator 50a for the hydraulic pump 50 through a signal line 31 so that the delivery rate of the hydraulic pump 50 can be adjusted.

With this embodiment thus constructed, an equivalent function to that obtained by the conventional open center directional control valve can be achieved. In addition, since the pilot flow passes the throttle 30 as the flow rate detecting means at a small rate, a relief valve which has been conventionally provided in parallel to the throttle can be dispensed with, and the flow rate detecting means can be reduced in size and improved in reliability.

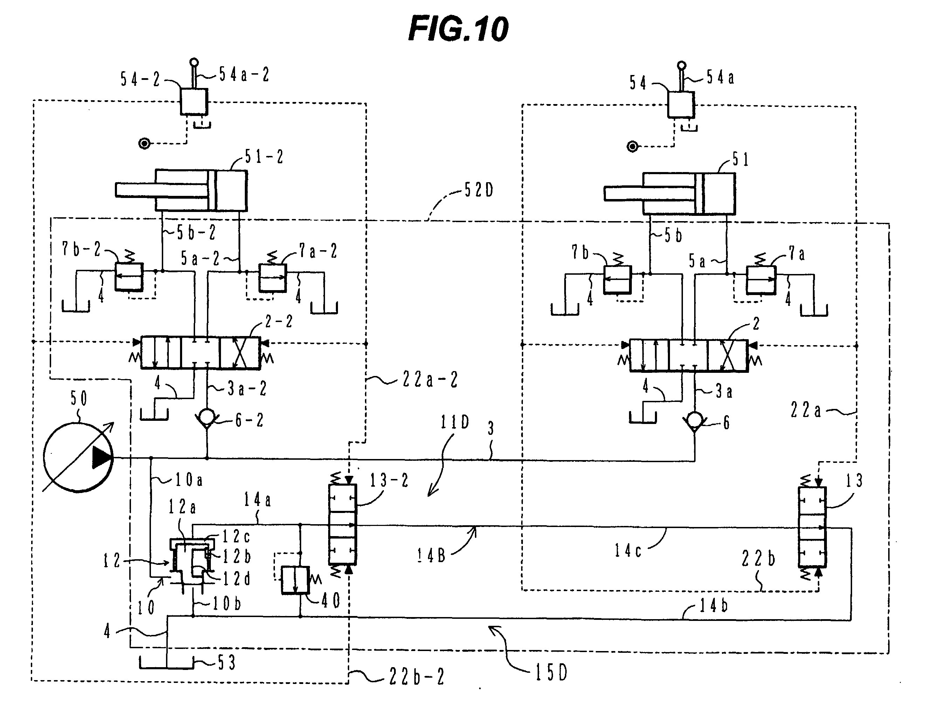

A fifth embodiment of the present invention will be described with reference to Fig. 10. In Fig. 10, equivalent members to those shown in Figs. 1 and 5 are denoted by the same reference numerals.

Referring to Fig. 10, a pilot circuit 15D of throttle and cutoff means 11C included in a directional control valve apparatus 52D of this embodiment has a relief valve 40 connected in parallel to the sub-spool 13-2 as shown. When the pressure in the passage portion 14a of the pilot passage 14B rises in excess of the setting pressure of the relief valve 40, part or all of the pilot flow is drained to the reservoir 53 through the reservoir port 4.

With this embodiment thus constructed, when the pressure in the pilot passage 14a in which the pressure rises in relation to the feeder port 3 rises in excess of the setting pressure, the relief valve 40 is opened to lower the pressure in the back pressure chamber 12c of the logic valve 12, whereupon the valve body 12a of the logic valve 12 cutting off the communication between the feeder port 3 and the reservoir port 4 is moved upward on the drawing. Accordingly, the relief valve 40 can set an upper limit of the maximum pressure imposed on the feeder port 3.

Thus, by providing the relief valve 40 in the pilot passage 14a instead of a conventional large-sized relief valve which has been used to release a large flow rate supplied from the hydraulic pump 50, and releasing the pilot flow through the relief valve 40, an equivalent function to that obtained by the conventional relief valve can be achieved and the construction of the hydraulic drive system and the directional control valve apparatus can be further simplified.

### INDUSTRIAL APPLICABILITY

According to the present invention, the axial length of the spool of the directional control valve can be shortened without impairing the function of an open center directional control valve, and an improvement in machining accuracy and a more compact structure can be realized. In addition, an equivalent function to that obtained by the open center directional control valve can be developed with no need of using a controller, and the manufacture cost of the directional control valve can be cut down.

Also, according to the present invention, in a directional control valve apparatus which is constructed as a multiple valve including a plurality of main spools arranged side by side, a weight reduction of the housing corresponding to need of no bypass port is achieved in proportion to the number of the main spools. As a result, the housing can be greatly reduced in weight and size and the manufacture cost can be considerably cut down.

## Claims

1. A hydraulic drive system comprising a hydraulic pump (50), an actuator (51) driven by a hydraulic fluid delivered from said hydraulic pump, a closed center directional control valve (2) connected to said hydraulic pump through a hydraulic fluid supply line (3) and controlling a flow of the hydraulic fluid supplied to said actuator, an unloading circuit (10) interconnecting the hydraulic fluid supply line of said hydraulic pump and a reservoir (53), and throttle and cut-off means (11, 11B, 11C, 11D) installed in said unloading circuit for throttling and cutting off said unloading circuit depending on an amount by which said directional control valve is operated, wherein:
said throttle and cut-off means (11, 11B, 11C, 11D) comprises a logic valve (12), a pilot circuit (15, 15B, 15C, 15D) including a pilot variable throttle (13, 13a, 13b) to control a rate of a pilot flow for controlling an opening area of said logic valve depending on the rate of the pilot flow, and operation interlock means (22a, 22b; 54c) for changing an opening of said pilot variable throttle (13, 13a, 13b) depending on the operation amount of said directional control valve (2), **characterized in that**
said logic valve (12) comprises a valve body (12(a) of the seat valve type arranged to close and open between an inlet portion connected to said hydraulic fluid supply line (3) and an outlet portion connected to said reservoir (53), a back pressure chamber (12c) formed to face a back side end of said valve body, and a feedback slit (12b) formed in said valve body to allow said inlet portion to communicate with said back pressure chamber in such a manner that an opening area of said feedback slit changes depending on an amount by which said valve body is moved, said pilot circuit being connected such that said pilot flow is formed to pass through said inlet portion of the logic valve, said feedback slit and back pressure chamber of the logic valve and said pilot variable throttle to said reservoir.

2. A hydraulic drive system according to claim 1, wherein said operation interlock means (22a, 22b; 54c) reduces the opening of said pilot variable throttle (13, 13a, 13b) as the operation amount of said directional control valve (2) increases.

3. A hydraulic drive system according to claim 1, further comprising a pilot valve (54) for outputting a pilot pressure as an operation signal and driving said directional control valve (2), wherein said operation interlock means (22a, 22b) comprises means for introducing the same pilot pressure as output from said pilot valve to said directional control valve (2) and said pilot variable throttle (13, 13a, 13b) of said throttle and cut-off means (11).

4. A hydraulic drive system according to claim 1, wherein said actuator (51, 51-2) and said directional control valve (2, 2-2) are each provided in plural number, and said pilot variable throttle (13, 13-2) of said throttle and cut-off means (11B) is provided in plural number corresponding to said plurality of directional control valves, said plurality of pilot variable throttles being connected in series.

5. A hydraulic drive system according to claim 1, wherein flow rate detecting means (30) for detecting the rate of the pilot flow is disposed between said pilot variable throttle (13, 13-2) of said throttle and cut-off means (11C) and said reservoir (53), a delivery rate of said hydraulic pump (50) being regulated by using a signal generated by said flow rate detecting means.

6. A hydraulic drive system according to claim 1, wherein a relief valve (40) is disposed in parallel to said pilot variable throttle (13, 13-2) of said throttle and cut-off means (11D).

7. A directional control valve apparatus (52) comprising a valve housing (1), a main spool (2) slidably disposed in said housing and communicating a feeder port (3) connected to a hydraulic pump (50) with load ports (5a, 5b) connected to an actuator (51), an unloading circuit (10) interconnecting said feeder port and a reservoir port (4) connected to a reservoir (53), and throttle and cut-off means (11, 11B, 11C, 11D) installed in said unloading circuit for throttling and cutting off said unloading circuit depending on an amount by which said main spool is operated, wherein:
said throttle and cut-off means (11, 11B, 11C, 11D) comprises a logic valve (12), a sub-spool (13) including a pilot variable throttle (13a, 13b) to control a rate of a pilot flow for controlling an opening area of said logic valve depending on the rate of the pilot flow, said sub-spool being configured to reduce an opening of said pilot variable throttle as said sub-spool displaces from a neutral position, and operation interlock means (22a, 22b; 54c) for displacing said sub-spool depending on the operation amount of said main spool (2) **characterized in that**
said logic valve (12) comprises a valve body (12(a) of the seat valve type arranged to close and open between an inlet portion connected to said feeder port (3) and an outlet portion connected to said reservoir port (4), a back pressure chamber (12c) formed to face a back side end of said valve body, and a feedback slit (12b) formed in said valve body to allow said inlet portion to communicate with said back pressure chamber in such a manner that an opening area of said feedback slit changes depending on an amount by which said valve body is moved, said pilot variable throttle of said sub-spool being connected such that said pilot flow is formed to pass through said inlet portion of the logic valve, said feedback slit and back pressure chamber of the logic valve and said pilot variable throttle to said reservoir port.

8. A directional control valve apparatus according to claim 7, wherein said operation interlock means (22a, 22b) comprises means for communicating pilot pressure bearing chambers (21a, 21b) defined at both ends of said main spool (2) respectively with pilot pressure bearing chambers (23a, 23b) defined at both ends of said sub-spool (13).

9. A directional control valve apparatus according to claim 7, wherein said main spool (2) and said sub-spool (13) are arranged in said housing (1) parallel to each other.

10. A directional control valve apparatus according to claim 7, further comprising a load check valve (6) disposed in an inlet portion (3a) of said main spool (2) for preventing a hydraulic fluid from flowing backward from said load ports (5a, 5b) to said feeder port (3), said sub-spool (13) being arranged parallel to said main spool (2) on the side opposite to said load check valve (6) with said main spool positioned there between.

11. A directional control valve apparatus according to claim 7, wherein said valve apparatus is constructed as a multiple valve including a plurality of main spools (2, 2-2) arranged side by side, and corresponding plural sets of combination of said main spools and sub-spools (13, 13-2) are installed in said valve housing (1), said plurality of sub-spools being connected in series.

12. A directional control valve apparatus according to claim 7, wherein flow rate detecting means (30) for detecting the rate of the pilot flow is disposed between said sub-spool (13, 13-2) and said reservoir port (4), a delivery rate of said hydraulic pump (50) being regulated by using a signal generated by said flow rate detecting means.

13. A directional control valve apparatus according to claim 7, wherein a relief valve (40) is disposed in parallel to said sub-spool (13, 13-2).

## Patentansprüche

1. Hydraulisches Antriebssystem mit einer Hydraulikpumpe (50), einem durch ein von der Hydraulikpumpe gefördertes Hydraulikfluid angetriebenen Aktuator (51), einem in Ruhelage geschlossenem Wegeventil (2), das mit der Hydraulikpumpe durch eine Hydraulikfluid-Zufuhrleitung (3) verbunden ist und die Strömung des zum Aktuator geförderten Hydraulikfluids steuert, einem Entlastungsschaltkreis (10), der die Hydraulikfluid-Zufuhrleitung der Hydraulikpumpe und einen Behälter (53) miteinander verbindet, und einer Drossel- und Sperreinrichtung (11, 11B, 11C, 11D), die in dem Entlastungskreislauf zum Drosseln und Sperren des Entlastungskreislaufs in Abhängigkeit von dem Betrag, durch den das Wegeventil betätigt wird, eingebaut ist, wobei:
die Drossel- und Sperreinrichtung (11, 11B, 11C, 11D) ein Logikventil (12), einen Steuerschaltkreis (15, 15B, 15C, 15D) mit einer verstellbaren Steuerdrossel (13, 13a, 13b) zum Steuern einer Menge einer Steuerströmung zum Steuern eines Öffnungsbereichs des Logikventils in Abhängigkeit von der Menge der Steuerströmung, sowie eine Betätigungssperreinrichtung (22a, 22b; 54c) zum Verändern der Öffnung der verstellbaren Steuerdrossel (13, 13a, 13b) in Abhängigkeit von dem Betätigungsbetrag des Wegeventils (2) umfasst, **dadurch gekennzeichnet, dass**
das Logikventil (12) einen Ventilkörper (12a) vom Sitzventiltyp, der so angeordnet ist, dass er sich zwischen einem mit der Hydraulikfluid-Zufuhrleitung (3) verbundenen Eingangsabschnitt und einem mit dem Behälter (53) verbundenen Ausgangsabschnitt schließt und öffnet, eine hintere Druckkammer (12c), die so ausgebildet ist, dass sie dem rückseitigen Ende des Ventilkörpers gegenüberliegt, und einen Rückführungsschlitz (12b) umfasst, der in dem Ventilkörper ausgebildet ist, um zu ermöglichen, dass der Eingangsabschnitt mit der hinteren Druckkammer in einer solchen Art und Weise in Verbindung steht, dass ein Öffnungsbereich des Rückführungsschlitzes sich in Abhängigkeit von dem Betrag, um den der Ventilkörper bewegt wird, ändert, wobei der Steuerschaltkreis so verbunden ist, dass die Steuerströmung gebildet wird, um durch den Eingangsabschnitt des Logikventils, den Rückführungsschlitz und die hintere Druckkammer des Logikventils sowie die verstellbare Steuerdrossel zu dem Behälter hindurch zu treten.

2. Hydraulisches Antriebssystem nach Anspruch 1, wobei die Betätigungssperreinrichtung (22a, 22b; 54c) die Öffnung der verstellbaren Steuerdrossel (13, 13a, 13b) verkleinert, wenn sich der Betätigungsbetrag des Wegeventils (2) erhöht.

3. Hydraulisches Antriebssystem nach Anspruch 1, das weiter ein Steuerventil (54) zum Ausgeben eines Steuerdrucks als Betätigungssignal und zum Betreiben des Wegeventils (2) umfasst, wobei die Betätigungssperreinrichtung (22a, 22b) Mittel zum Einführen desselben Steuerdrucks als Ausgabe von dem Steuerventil an das Wegeventil (2) und die verstellbare Steuerdrossel (13, 13a, 13b) der Drossel- und Sperreinrichtung (11) aufweist.

4. Hydraulisches Antriebssystem nach Anspruch 1, wobei der Aktuator (51, 51-2) und das Wegeventil (2, 2-2) jeweils mehrfach vorliegen und die verstellbare Steuerdrossel (13, 13-2) der Drossel- und Sperreinrichtung (11B) entsprechend den mehreren Wegeventilen mehrfach vorliegt, wobei die mehreren Steuerdrosseln in Reihe geschaltet sind.

5. Hydraulisches Antriebssystem nach Anspruch 1, wobei die Strömungsmengen-Bestimmungseinrichtung (30) zum Bestimmen der Menge der Steuerströmung zwischen der verstellbaren Steuerdrossel (13, 13-2) der Drossel- und Sperreinrichtung (11C) und dem Behälter (53) angeordnet ist, wobei die Fördermenge der Hydraulikpumpe (50) durch ein von der Strömungsmengen-Bestimmungseinrichtung erzeugtes Signal reguliert wird.

6. Hydraulisches Antriebssystem nach Anspruch 1, wobei ein Entlastungsventil (40) parallel zu der verstellbaren Steuerdrossel (13, 13-2) der Drossel- und Sperreinrichtung (11D) angeordnet ist.

7. Wegeventilvorrichtung (52) mit einem Ventilgehäuse (1), einem Hauptsteuerschieber (2), der verschiebbar in dem Gehäuse angeordnet ist und mit einer Zufuhröffnung (3) in Verbindung steht, welche mit einer Hydraulikpumpe (50) mit Lastöffnungen (5a, 5b) verbunden ist, die mit einem Aktuator (51) verbunden sind, einem Entlastungsschaltkreis (10), der die Zufuhröffnung und eine mit einem Behälter (53) verbundene Behälteröffnung (4) miteinander verbindet, und einer Drossel- und Sperreinrichtung (11, 11B, 11C, 11D), die in dem Entlastungsschaltkreis zum Drosseln und Sperren des Entlastungsschaltkreises in Abhängigkeit von einem Betrag, durch den der Hauptsteuerschieber betätigt wird, eingebaut ist, wobei:
die Drossel- und Sperreinrichtung (11, 11B, 11C, 11D) ein Logikventil (12), einen Untersteuerschieber (13) mit einer verstellbaren Steuerdrossel (13a, 13b) zum Steuern der Menge einer Steuerströmung zum Steuern eines Öffnungsbereichs des Logikventils in Abhängigkeit von der Menge der Steuerströmung, wobei der Untersteuerschieber so konfiguriert ist, dass er die Öffnung der verstellbaren Steuerdrossel verkleinert, wenn der Untersteuerschieber aus einer neutralen Position gerückt wird, und eine Betätigungssperreinrichtung (22a, 22b; 54c) zum Verrücken des Untersteuerschiebers in Abhängigkeit von dem Betätigungsbetrag des Hauptsteuerschiebers (2) umfasst, **dadurch gekennzeichnet, dass**
das Logikventil (12) einen Ventilkörper (12(a) vom Sitzventiltyp, das so angeordnet ist, dass es sich zwischen einem mit der Zufuhröffnung (3) verbundenen Eingangsabschnitt und einem mit der Behälteröffnung (4) verbundenen Ausgangsabschnitt schließt und öffnet, eine hintere Druckkammer (12c), die so ausgebildet ist, dass sie dem rückseitigen Ende des Ventilkörpers gegenüberliegt, und einen Rückführungsschlitz (12b) umfasst, der in dem Ventilkörper ausgebildet ist, um zu ermöglichen, dass der Eingangsabschnitt mit der hinteren Druckkammer in einer solchen Art und Weise in Verbindung steht, dass ein Öffnungsbereich des Rückführungsschlitzes sich in Abhängigkeit von dem Betrag, um den der Ventilkörper bewegt wird, verändert, wobei die verstellbare Steuerdrossel des Untersteuerschiebers so verbunden ist, dass die Steuerströmung gebildet wird, um durch den Eingangsabschnitt des Logikventils, den Rückführungsschlitz und die hintere Druckkammer des Logikventils sowie die verstellbare Steuerdrossel zu der Behälteröffnung hindurch zu treten.

8. Wegeventilvorrichtung nach Anspruch 7, wobei die Betätigungssperreinrichtung (22a, 22b) Mittel für eine Verbindung zwischen den an beiden Enden des Hauptsteuerschiebers (2) definierten Steuerdruck-Lagerkammern (21a, 21b) jeweils mit den an beiden Enden des Untersteuerschiebers (13) definierten Steuerdruck-Lagerkammern (23a, 23b) aufweist.

9. Wegeventilvorrichtung nach Anspruch 7, wobei der Hauptsteuerschieber (2) und der Untersteuerschieber (13) in dem Gehäuse (1) parallel zueinander angeordnet sind.

10. Wegeventilvorrichtung nach Anspruch 7, die weiter ein in einem Eingangsabschnitt (3a) des Hauptsteuerschiebers (2) angeordnetes Lastrückschlagventil (6) umfasst, um zu verhindern, dass Hydraulikfluid von den Lastöffnungen (5a, 5b) zu der Zufuhröffnung (3) zurückfließt, wobei der Untersteuerschieber (13) parallel zum Hauptsteuerschieber (2) auf der dem Lastrückschlagventil (6) gegenüberliegenden Seite angeordnet ist, wobei der Hauptsteuerschieber dazwischen positioniert ist.

11. Wegeventilvorrichtung nach Anspruch 7, wobei die Ventilvorrichtung als Mehrwegeventil mit mehreren Seite an Seite angeordneten Hauptsteuerschiebern (2, 2-2) konstruiert ist und entsprechende mehrere Sätze einer Kombination aus den Hauptsteuerschiebern und den Untersteuerschiebern (13, 13-2) in dem Ventilgehäuse (1) installiert sind, wobei die mehreren Untersteuerschieber in Reihe geschaltet sind.

12. Wegeventilvorrichtung nach Anspruch 7, wobei die Strömungsmengen-Bestimmungseinrichtung (30) zum Bestimmen der Menge der Steuerströmung zwischen dem Untersteuerschieber (13, 13-2) und der Behälteröffnung (4) angeordnet ist, wobei die Fördermenge der Hydraulikpumpe (50) durch Heranziehung eines von der Strömungsmengen-Bestimmungseinrichtung erzeugten Signals reguliert wird.

13. Wegeventilvorrichtung nach Anspruch 7, wobei ein Entlastungsventil (40) parallel zu dem Untersteuerschieber (13, 13-2) angeordnet ist.

## Revendications

1. Système d'entraînement hydraulique comprenant une pompe hydraulique (50), un actionneur (51) piloté par un fluide hydraulique provenant de ladite pompe hydraulique, une soupape de commande directionnelle centrale fermée (2) connectée à ladite pompe hydraulique par l'intermédiaire d'une conduite d'alimentation en fluide hydraulique (3) et commandant un écoulement du fluide hydraulique fourni audit actionneur, un circuit de décharge (10) interconnectant la conduite d'alimentation en fluide hydraulique de ladite pompe hydraulique et un réservoir (53), ainsi que des moyens de coupure et d'étranglement (11, 11B, 11C, 11D) installés dans ledit circuit de décharge pour étrangler et couper ledit circuit de décharge en fonction d'une quantité par laquelle ladite soupape de commande directionnelle est actionnée, dans lequel :
lesdits moyens de coupure et d'étranglement (11, 11B, 11C, 11D) comprennent une soupape logique (12), un circuit pilote (15, 15B, 15C, 15D) comprenant un obturateur pilote variable (13, 13a, 13b) pour commander un taux d'un écoulement pilote afin de commander une zone ouverte de ladite soupape logique en fonction du taux d'écoulement pilote, et des moyens de blocage du fonctionnement (22a, 22b, 54c) pour modifier une ouverture dudit obturateur pilote variable (13, 13a, 13b) en fonction de la quantité de travail de ladite soupape de commande directionnelle (2), **caractérisé en ce que** :
ladite soupape logique (12) comprend un corps de soupape (12(a)) du type vanne à siège agencé pour se fermer et s'ouvrir entre une partie d'entrée connectée à ladite conduite d'alimentation en fluide hydraulique (3) et une partie de sortie connectée audit réservoir (53) une chambre de contre-pression (12c) conçue pour faire face à une extrémité arrière dudit corps de soupape, et une fente de rétroaction (12b) formée dans ledit corps de soupape pour permettre à ladite partie d'entrée de communiquer avec ladite chambre de contre-pression de telle sorte qu'une zone d'ouverture de ladite fente de rétroaction change en fonction d'une quantité par laquelle ledit corps de soupape est déplacé, ledit circuit pilote étant connecté de sorte que ledit écoulement pilote soit conçu pour passer à travers ladite partie d'entrée de ladite soupape logique, ladite fente de rétroaction et ladite chambre de contre-pression de la soupape logique et dudit obturateur pilote variable vers ledit réservoir.

2. Système d'entraînement hydraulique selon la revendication 1, dans lequel lesdits moyens de blocage du fonctionnement (22a, 22b ; 54c) réduisent l'ouverture dudit obturateur pilote variable (13, 13a, 13b) en même temps que la quantité opératoire de ladite soupape de commande directionnelle (2) augmente.

3. Système d'entraînement hydraulique selon la revendication 1, comprenant en outre une soupape pilote (54) pour délivrer une pression pilote en tant que signal de fonctionnement et entraînant ladite soupape de commande directionnelle (2), dans lequel lesdits moyens de blocage du fonctionnement (22a, 22b) comprennent des moyens pour introduire la même pression pilote provenant de ladite soupape pilote vers ladite soupape de commande directionnelle (2) et ledit obturateur pilote variable (13, 13a, 13b) desdits moyens de coupure et d'étranglement (11).

4. Système d'entraînement hydraulique selon la revendication 1, dans lequel ledit actionneur (51, 51-2) et ladite soupape de commande directionnelle (2, 2-2) sont tous deux proposés en nombre plural, et ledit obturateur pilote variable (13- 13-2) desdits moyens de coupure et d'étranglement (11B) est proposé en nombre plural correspondant à ladite pluralité des soupapes de commande directionnelles, ladite pluralité des obturateurs pilotes variables étant connectée en série.

5. Système d'entraînement hydraulique selon la revendication 1, dans lequel les moyens de détection du taux de l'écoulement pilote sont disposés entre ledit obturateur pilote variable (13, 13-2) desdits moyens de coupure et d'étranglement (11C) et ledit réservoir (53), un débit de ladite pompe hydraulique (50) étant commandé en utilisant un signal généré par lesdits moyens de détection du taux de l'écoulement.

6. Système d'entraînement hydraulique selon la revendication 1, dans lequel un clapet de décharge (40) est disposé en parallèle audit obturateur pilote variable (13, 13-2) desdits moyens de coupure et d'étranglement (11D).

7. Dispositif de soupape de commande directionnelle (52) comprenant un logement de soupape (1) un tiroir à pistons principal (2) disposé de façon coulissante dans ledit logement et faisant communiquer un orifice d'alimentation (3) connecté à une pompe hydraulique (50) avec des orifices de chargement (5a, 5b) connectés à un actionneur (51), un circuit de décharge (10) s'interconnectant avec ledit orifice d'alimentation et un orifice de réservoir (4) connecté à un réservoir (53) et des moyens de coupure et d'étranglement (11, 11B, 11C, 11D) installés dans ledit circuit de décharge pour étrangler et couper ledit circuit de décharge en fonction d'une quantité par laquelle ledit tiroir à pistons principal est actionné, dans lequel :
lesdits moyens de coupure et d'étranglement (11, 11B, 11C, 11D) comprennent une soupape logique (12), un tiroir à pistons secondaire (13) comprenant un obturateur pilote variable (13a, 13b) pour commander un taux d'écoulement pilote afin de commander une zone ouverte de ladite soupape logique en fonction du taux d'écoulement pilote, ledit tiroir à pistons secondaire étant configuré pour réduire une ouverture dudit obturateur pilote variable par le fait que ledit tiroir à pistons secondaire se déplace d'une position neutre, et des moyens de blocage du fonctionnement (22a, 22b ; 54c) pour déplacer ledit tiroir à pistons secondaire en fonction de la quantité opératoire dudit tiroir à pistons principal (2), **caractérisé en ce que** :
ladite soupape logique (12) comprend un corps de soupape (12(a)) du type vanne à siège agencé pour s'ouvrir et se fermer entre une partie d'entrée connectée audit orifice d'alimentation (3) et une partie de sortie connectée audit orifice de réservoir (4) une chambre de contre-pression (12c) conçue pour faire face à une extrémité arrière dudit corps de soupape, et une fente de rétroaction (12b) formée dans ledit corps de soupape pour permettre à ladite partie d'entrée de communiquer avec ladite chambre de contre-pression de telle sorte qu'une zone d'ouverture de ladite fente de rétroaction change en fonction d'une quantité par laquelle ledit corps de soupape est déplacé, ledit obturateur pilote variable dudit sous-tiroir étant connecté de sorte que ledit écoulement pilote soit conçu pour passer à travers ladite partie d'entrée de la soupape logique, ladite fente de rétroaction et ladite chambre de contre-pression de la soupape logique et dudit obturateur pilote variable vers ledit orifice de réservoir.

8. Dispositif de soupape de commande directionnelle selon la revendication 7, dans lequel les moyens de blocage du fonctionnement (22a, 22b) comprennent des moyens pour faire communiquer les chambres d'appui de pression pilote (21a, 21b) définies aux deux extrémités dudit tiroir à pistons principal (2) respectivement avec les chambres d'appui de pression pilote (23a, 23b) définies aux deux extrémités dudit tiroir à pistons secondaire (13).

9. Dispositif de soupape de commande directionnelle selon la revendication 7, dans lequel ledit tiroir à pistons principal (2) et ledit tiroir à pistons secondaire (13) sont disposés dans ledit logement (1) parallèlement l'un à l'autre.

10. Dispositif de soupape de commande directionnelle selon la revendication 7, comprenant en outre un clapet de chargement (6) disposé dans une partie d'entrée (3a) dudit tiroir à pistons principal (2) pour empêcher un fluide hydraulique de s'écouler en arrière desdits orifices de chargement (5a, 5b) vers ledit orifice d'alimentation (3), ledit tiroir à pistons secondaire (13) étant disposé parallèlement audit tiroir à pistons principal (2) sur le côté opposé audit clapet de chargement (6) avec ledit tiroir à pistons principal positionné au milieu.

11. Dispositif de soupape de commande directionnelle selon la revendication 7, dans lequel ledit dispositif de soupape est construit comme une soupape multiple comprenant une pluralité de tiroirs à pistons principaux (2, 2-2) disposés côte à côte, et plusieurs séries de combinaison correspondantes desdits tiroirs à pistons principaux et tiroirs à pistons secondaires (13, 13-2) sont installées dans ledit logement de soupape (1), ladite pluralité de tiroirs à pistons secondaires étant connectée en série.

12. Dispositif de soupape de commande directionnelle selon la revendication 7, dans lequel les moyens de détection du débit (30) pour détecter le taux d'écoulement pilote sont disposés entre ledit tiroir à pistons secondaire (13, 13-2) et ledit orifice de réservoir (4), un débit de ladite pompe hydraulique (50) étant commandé par l'utilisation d'un signal généré par lesdits moyens de détection du débit.

13. Dispositif de soupape de commande directionnelle selon la revendication 7, dans lequel un clapet de décharge (40) est disposé en parallèle audit tiroir à pistons secondaire (13, 13-2).
